Europäisches Patentamt

European Patent Office

Office européen des brevets

(19)

(11) Publication number: **0 287 161 B1**

(12) **EUROPEAN PATENT SPECIFICATION**

(45) Date of publication of patent specification: **18.03.92**

(51) Int. Cl.5: **B61F 1/14**, B61F 3/04, B61F 3/12, B61F 5/08

(21) Application number: **88200667.9**

(22) Date of filing: **07.04.88**

(54) **Rail vehicle and bogie therefor.**

(30) Priority: **16.04.87 NL 8700924**

(43) Date of publication of application:
**19.10.88 Bulletin  88/42**

(45) Publication of the grant of the patent:
**18.03.92 Bulletin  92/12**

(84) Designated Contracting States:
**AT BE CH DE ES FR GB GR IT LI LU NL SE**

(56) References cited:
**AU-A- 532 155          DE-B- 1 106 359
FR-A- 1 206 136        FR-A- 1 512 934
FR-A- 2 113 257        FR-A- 2 227 163
FR-A- 2 413 230        US-A- 3 826 202
US-A- 4 625 653        US-A- 4 648 326**

**ZEITSCHRIFT FÜR EISENBAHNWESEN UND VERKEHRSTECHNIK - GLASERS ANNALEN, vol. 103, Nr. 9, September 1979, pages 327-337, Georg Siemens Verlagsbuchhandlung; B.H. HUBER et al.: "Die Entwicklung des Federungssystems für ein Hochgeschwindigkeits-Drehgestell am Beispiel des METROLINER-Triebwagens"**

(73) Proprietor: **WERKSPOOR SERVICES B.V.
Oostenburgervoorstraat 80
NL-1018 MR Amsterdam(NL)**

(72) Inventor: **Keizer, Cornelis Pieter
C.de Bourbonlaan 43
NL-3136 CL Vlaardingen(NL)**

(74) Representative: **Konings, Lucien Marie Cornelis Joseph et al
OCTROOIBUREAU ARNOLD & SIEDSMA
Sweelinckplein 1
NL-2517 GK Den Haag(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The invention relates to a rail vehicle as indicated in the preamble of claim 1.

Such a rail vehicle is known from FR-A-2 227 163. The bolster beam and thereby the coach body are thus held firmly in position in travel direction, but can move in crosswise direction relative to the frame of the bogie. The bolster beam and thus the coach body are not held well in this crosswise direction. So the coach body is not held in a stable way on the bogie and may lean over too much.

The invention has for its object to improve the stability and the travel comfort. For this purpose the rail vehicle according to the invention has the characterizing feature of claim 1 and/or the characterizing feature of claim 2.

Due to the characterizing feature of claim 1 the combination of bolster beam and coach body can move sidewards in case of a transversely directed shock which is absorbed in a soft way as the transversely directed movement is transferred into a roll movement about a high positioned longitudinally extending roll-axis. In this inclined position a horizontally directed force component acting on this combination centralises it, thus improving stability as well as travel comfort.

Due to the feature of claim 2 the roll movement of the coach body is not reacted by rigid springs but the roll movement is softly counteracted. During the roll movement the two springs with low spring rigidity have opposed compression movements, which are counteracted by torsion movements of the torsion member. These counteracting torsion movements so counteract the roll movements, thus improving stability as well as travel comfort.

Excessive displacement of the coach body in crosswise direction is prevented if the transverse displacement of the coach body relative to the bolster beam is bounded by means of elastic stop members.

The hunting movement is damped in efficient manner if the feature of claim 4 is applied.

The invention also relates to and provides a bogie evidently intended for a rail vehicle according to the invention.

The invention will be elucidated in the description hereinafter with reference to a drawing. In the drawing in schematic form:

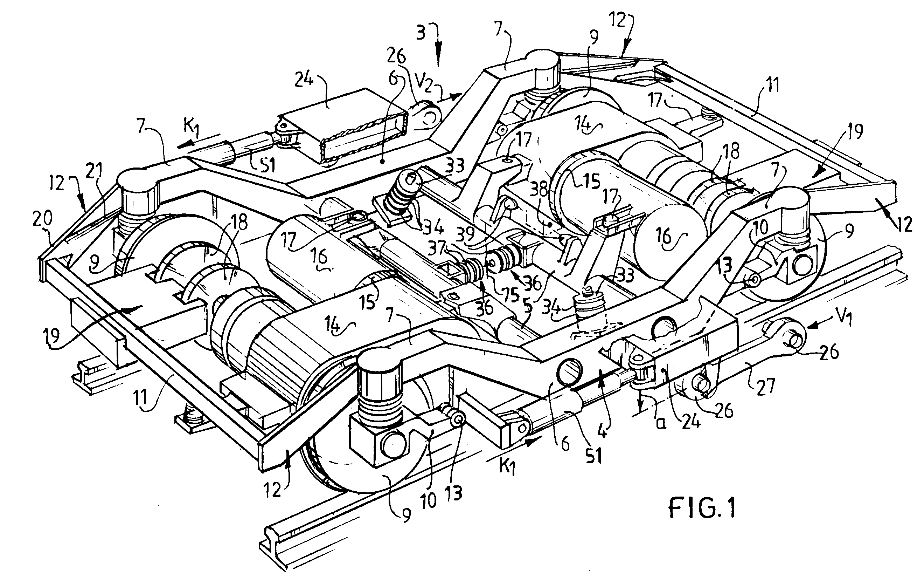

Fig. 1 shows a perspective, schematic view of a preferred embodiment of a bogie according to the invention;

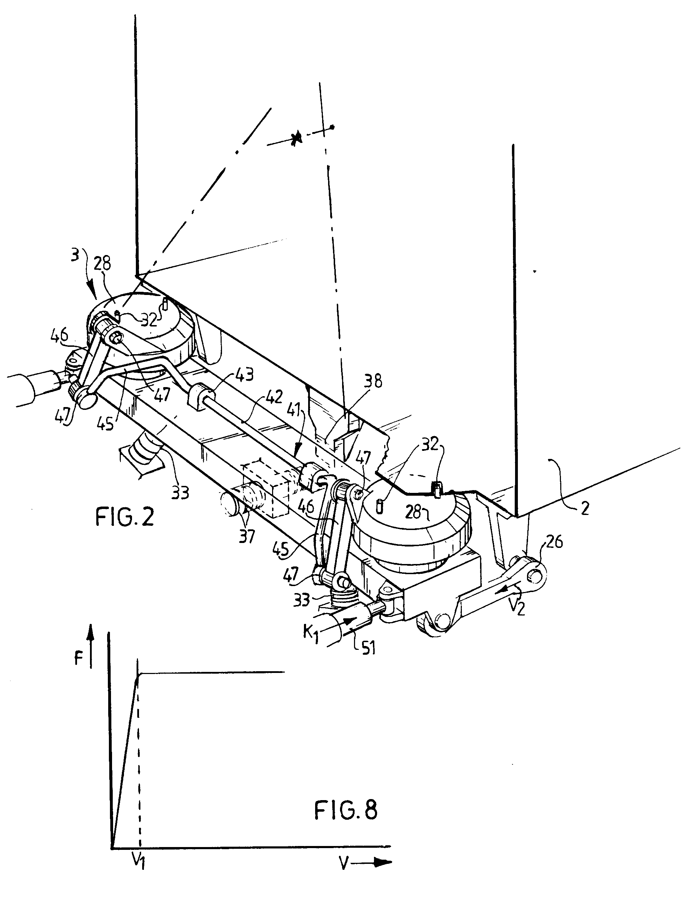

Fig. 2 shows on a larger scale a perspective view of a rail vehicle according to the invention at the point of the connection between vehicle body and bogie;

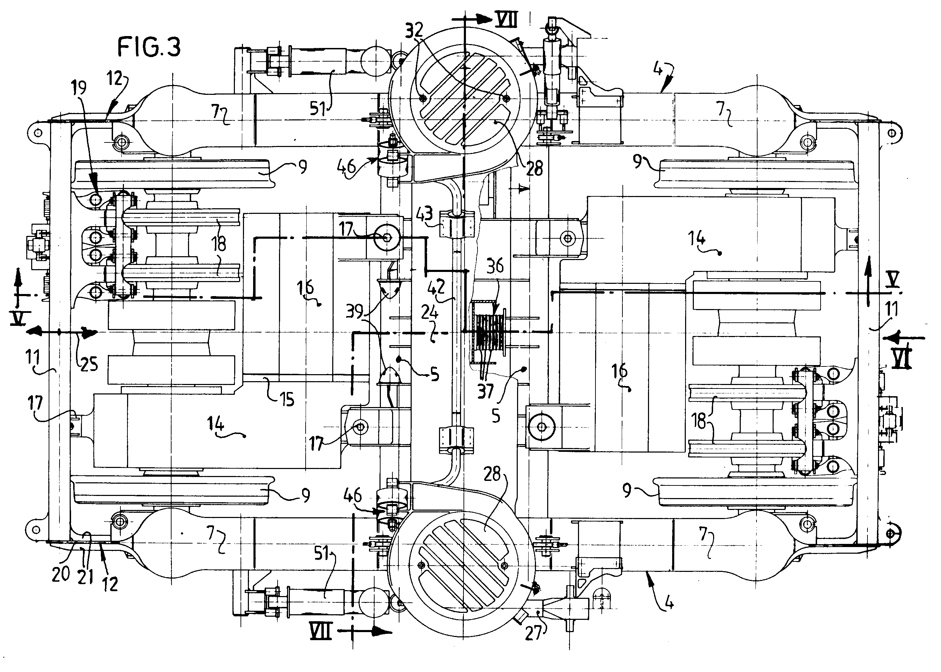

Fig. 3 is a top view of a bogie according to the invention drawn in more detail;

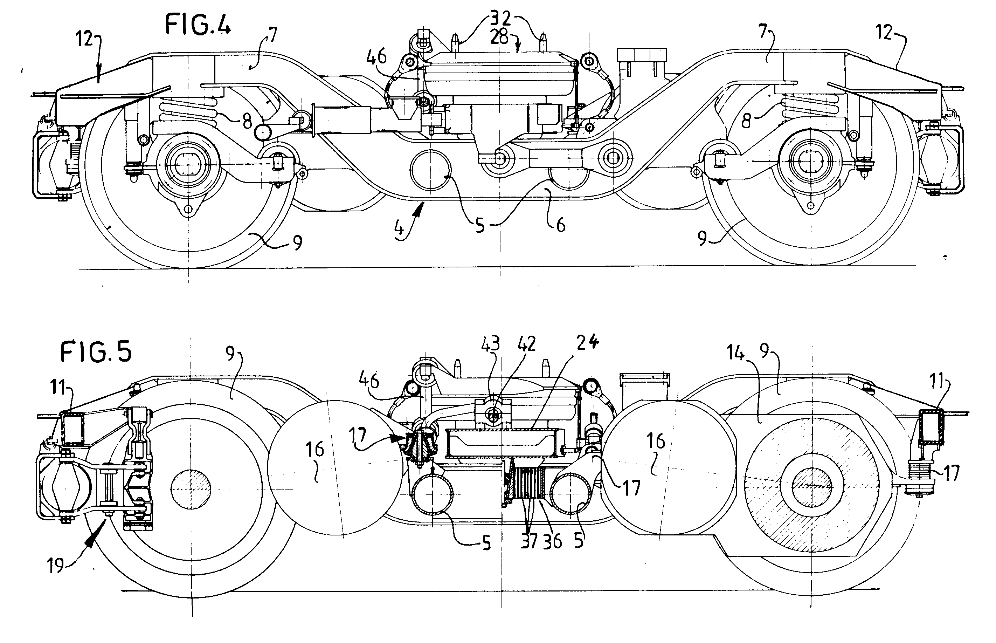

Fig. 4 is a side view of the bogie from fig. 3;

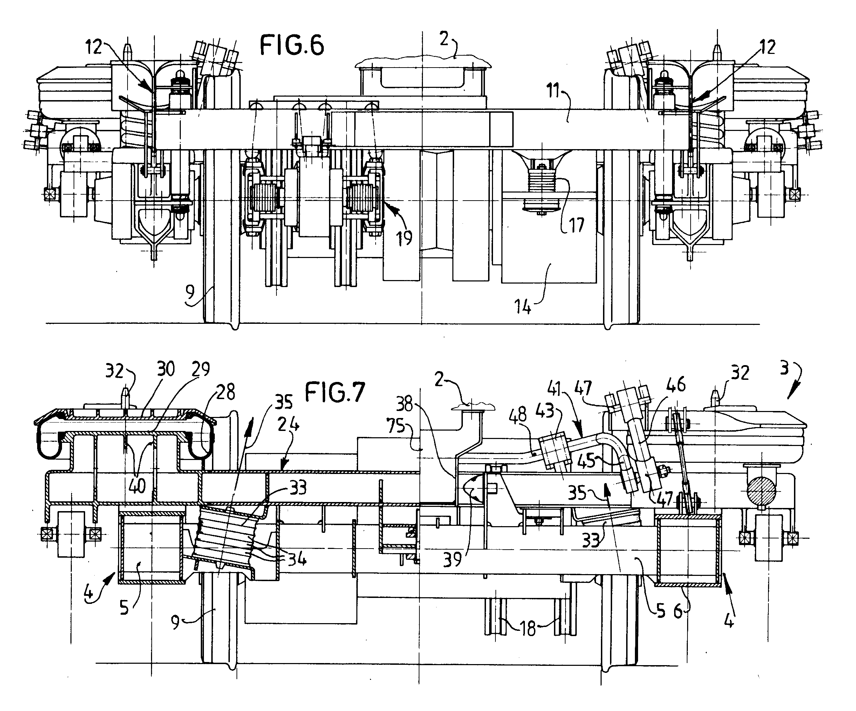

Fig. 5 is a section along line V-V from fig. 3;

Fig. 6 is a front view along arrow VI from fig. 3;

Fig. 7 is a section along line VII-VII from fig. 3;

and fig. 8 shows a damping curve of an applied damper.

A rail vehicle 1 according to the invention has a coach body 2 which supports on two bogies 3. Each bogie 3 has a frame 4 that is constructed from two tubular longitudinal girders 6 with swan-neck shaped ends 7, two pipe-shaped transverse girders 5, which are welded firmly to longitudinal girders 6, and two tubular end cross beams 11 which are connected via torsion slack connections 12 to both ends 7 of longitudinal girders 6. The ends 7 of longitudinal girders 6 support via spiral springs 8 on axle sets 9 which are held in place on frame 4 by means of lying swivelling arms 10 swivelling on horizontal transverse shafts 13. Each axle set 9 is driven via a drive gear 14 and an electro-motor 16 connected thereto with flange connections 15. Drive gear 14 and electro-motor 16 are supported as a unit by a transverse girder 5 and an end cross beam 11 and is connected thereto at three suspension points 17. Each axle set 9 has two brake discs co-acting with braking means 19 which are suspended on end cross beam 11. Absorbed by the end cross beam in addition to the weight of the drive unit and the braking means are the vertical forces of the drive torque and of the braking torque. While the connections 12 have a considerable bending rigidity in the vertical longitudinal plane, they are nevertheless torsion slack. The consist substantially of vertical plates 20 with cross ribs 21 which are arranged close to their neutral axis.

Bogie 3 comprises a central bolster beam 24 which extends transversely of the direction of travel 25 and which is connected to coach body 2 by means of swivelling arms 27 lying substantially in the travel direction 25 and swivelling on lying shafts 26. Coach body 2 supports via pneumatic springs 28 on bolster beam 24. The springs 28 each consist of a round lower dish 29 attached to bolster beam 24 and upper dish 30 which is attached to coach body 2 by means of pins 32 and located between them a rubber annular bellows 31 of substantially oval section. The ends of the hollow bolster beam 24 form closed additional spaces 39 for the air springs 28. In order to strengthen the surfaces exposed to the working pressure of the air springs, partitions 40 are arranged. Bolster beam 24 supports on the frame 4 of bogie 3 by means of two spring assemblies 33 consisting of plates 34 of rubber which have a high spring rigidity in the stacking direction 35 but have a low rigidity in the direction transverse thereof. The directions 35 are upward converging and encounter each other in the vertical transverse plane above the centre of gravity, as a result of which, in the case of deflection of coach body 2 in transverse direction relative to the central longitudinal plane 75, a horizontal recentering force component occurs which supplements the normal recentering force of the air springs 28. These spring assemblies 34 also lessen the risk of derailment in the case the air springs 28 should become empty. In addition spring assemblies 34 contribute to the roll stability.

The bolster beam 24 is held in position centrally in the direction of travel 25 by means of two spring assemblies 36, each consisting of a series of rubber plates 37. The spring assemblies have a high spring rigidity in the direction of travel 25, but in crosswise direction a low spring rigidity. Bolster beam 24 can thus move considerably in an elastic manner in crosswise direction while in travel direction 25 it can undergo only a small horizontal displacement. The coach body 2 has a central downward protrusion 38 that is received between two rubber cushions attached to bolster beam 24 and functioning as elastic stop members 39 to bound transverse displacement of coach body 2. A roll stabilizer 41 comprises a torsion tube 42 which is mounted on bolster beam 24 in two bearings 43 positioned at a slant and which has arms 45 directed substantially downward and in travel direction 25. Arms 45 are connected via mutually upward converging swivelling arms 46 arranged in the vertical transverse plane to coach body 2. Both the swivel axes 47 and the bearing axes 48 of bearings 43 run perpendicular to the direction of swivelling arms 46, while the form of torsion tube 42 is adapted thereto. Bolster beam 24 consists of a box girder having a high torsion rigidity. The torsion rigidity of the bolster beam 24 is utilized for the purpose of effecting an elastic constrained swinging movement of the frame 4 relative to bolster beam 24 on the one hand while preserving the rigidly elastic coupling between bolster beam 24 and frame 4 in the travel direction on the other. Used for this purpose are hydraulic dampers 51 with a damping curve as in fig. 8, where the damping force $F$ increases strongly at a low movement speed $v$ and in the case a determined speed $v$ is exceeded this damping force increases hardly or not at all. As a result when the bogie 3 passes a set of points it can perform the necessary rotation, while the slow rotational movement of the hunting movement is well damped. In this respect these dampers 51 lying in longitudinal direction 25 and connecting the ends of bolster beam 24 to frame 4 are arranged at a level difference $a$ relative to swivelling arms 27. If two equal inertia resistances of the coach body 2 are exerted via swivelling arms 27 on bolster beam 24, both these forces are together absorbed centrally by a spring assembly 36. Dampers 51 do not then function. In the case there is a sine-shaped path and opposing forces $K_1$ are exerted via dampers 51 on bolster beam 24 the latter is held back by opposing forces $K_2$. Owing to the height difference $a$ there is a resulting torsion moment $a \times K_1$ in the bolster beam 24. Because of the torsion rigidity of bolster beam 24 this moment of torsion is well absorbed and the hunting movement is thereby well damped.

It is noted that both a motor bogie and a running bogie without motor can be formed as according to the invention.

## Claims

1. Rail vehicle (1) comprising at least one coach body (2) which supports on at least two bogies (3), whereby each bogie (3) comprises a frame (4) having at least two longitudinal girders (6) and at least two transverse girders (5), whereby a bolster beam (24) extending transversely of the direction of travel (25) of said bogie (3) is connected to said coach body (2) by means of swivelling arms (27) located substantially in the travel direction (25) and swivelling on lying shafts (26) and whereby said coach body (2) supports on said bolster beam (24) via springs (28), whereby said bolster beam (24) is spring mounted in the travel direction (25) of said bogie (3) relative to said frame (4) by means of two spring assemblies (36) of elastic, for example rubber, plates (37) which have a high rigidity in the travel direction (25) but a small rigidity in crosswise direction, characterized in that the bolster beam (24) supports on the frame (4) via spring assemblies (33) of lying, elastic, for example rubber, plates which have a high rigidity in their upward slanting and inward directed stacking direction (35) but a small rigidity in a direction transversely thereof.

2. Rail vehicle (1) comprising at least one coach body (2) which supports on at least two bogies (3), whereby each bogie (3) comprises a frame (4) having at least two longitudinal girders (6) and at least two transverse girders (5), whereby a bolster beam (24) extending transversely of the direction of travel (25) of said bogie (3) is connected to said coach body (2) by means of swivelling arms (27) located substantially in the travel direction (25) and swivelling on lying shafts (26) and whereby said coach body (2) supports on said bolster beam (24) via springs (28), characterized in that said bolster beam (24) is spring mounted in the travel direction (25) of said bogie (3) relative to said frame (4) by means of two spring assemblies (36) of elastic, for example rubber, plates (37) which have a high rigidity in the travel direction (25) but a small rigidity in crosswise direction, and in that at least one torsion member (42) extending transversely of the travel direction (25) is connected to the vehicle body (2) on both sides via two upward converging swivelling arms (46), the coach body (2) being supported by the bogie (3) via at least two springs (28) of low rigidity, e.g. pneumatic springs, one of which being arranged at one side of the rail vehicle (1) and the other at the other side, said torsion member (42) with said two upward converging swivelling arms (46) kinematically bypassing said two springs (28) of low rigidity.

3. Rail vehicle (1) as claimed in claim 1 or 2, characterized in that the transverse displacement of the coach body (2) relative to the bolster beam (24) is bounded by means of elastic stop members (39).

4. Rail vehicle (1) as claimed in any of the foregoing claims, characterized in that the bolster beam (24) has a high torsion rigidity and that the swinging of said bolster beam (24) on a vertical axis relative to the frame is damped by means of hydraulic dampers (51) which have a large damping value (F) at low speed and which grip onto the ends of said bolster beam (24) at a different level than the swivelling arms (27).

5. Bogie (3) evidently intended for a rail vehicle (1) as claimed in any of the foregoing claims.

**Revendications**

1. Véhicule ferroviaire (1) comprenant au moins une caisse de voiture (2), qui s'appuie sur au moins deux bogies (3), chaque bogie (3) comprenant un châssis (4) ayant au moins deux poutres longitudinales (6) et au moins deux poutres transversales (5), une traverse (24) s'étendant transversalement au sens de la marche (25) dudit bogie (3) et étant reliées à ladite caisse de voiture (2) au moyen de bras oscillants (27) situés sensiblement dans le sens de la marche (25) et articulés sur des axes horizontaux (26), ladite caisse de voiture (2) prenant appui sur ladite traverse (24) par l'intermédiaire de ressorts (28), ladite traverse (24) étant montée élastiquement, dans le sens de la marche (25) dudit bogie (3), par rapport audit châssis (4) au moyen de deux blocs-ressorts (36) composés de lames élastiques (37) par exemple en caoutchouc, présentant une rigidité dans le sens de la marche (25) mais une faible rigidité dans le sens transversal, caractérisé en ce que la traverse (24) prend appui sur le châssis (4) par l'intermédiaire de blocs-ressorts (33) faits de lames horizontales élastiques, par exemple en caoutchouc, qui présentent une rigidité élevée dans le sens de leur empilage (35) orienté obliquement vers le haut et vers l'intérieur, mais une faible rigidité dans un sens transversal à celui-ci.

2. Véhicule ferroviaire (1) comprenant au moins une caisse de voiture (2) qui s'appuie sur au moins deux bogies (3), chaque bogie (3) comprenant un châssis (4) ayant au moins deux poutres longitudinales (6) et au moins deux poutres transversales (5), une traverse (24) s'étendant transversalement au sens de la marche (25) dudit bogie (3) et étant reliée à ladite caisse de voiture (2) au moyen de bras oscillants (27) situés sensiblement dans le sens de la marche (25) et articulés sur des axes horizontaux (26), ladite caisse de voiture (2) prenant appui sur ladite traverse (24) par l'intermédiaire de ressorts (28), caractérisé en ce que ladite traverse (24) est montée élastiquement dans le sens de la marche (25) dudit bogie (3) par rapport audit châssis (4), au moyen de deux blocs-ressorts (36) composés de lames (37) élastiques, par exemple en caoutchouc, présentant une rigidité élevée dans le sens de la marche (25) mais une faible rigidité dans le sens transversal et en ce qu'au moins un élément de torsion (42) s'étendant transversalement au sens de la marche (25) est relié à la caisse du véhicule (2) des deux côtés par l'intermédiaire de deux bras oscillants (46) convergeant vers le haut, la caisse de la voiture (2) prenant appui sur le bogie (3) par l'intermédiaire d'au moins deux ressorts (28) de faible rigidité, par exemple des ressorts pneumatiques, l'un d'eux étant placé d'un côté du véhicule ferroviaire (1) et l'autre de l'autre côté, ledit élément de torsion (42) avec lesdits deux bras oscillants (46) qui convergent vers le haut évitant de manière cinématique lesdits deux ressorts (28) de faible rigidité.

3. Véhicule ferroviaire (1) suivant la revendication 1 ou 2, caractérisé en ce que le déplacement transversal de la caisse de la voiture (2) par rapport à la traverse (24) est limité au moyen d'éléments de butée élastiques (39).

4. Véhicule ferroviaire (1) suivant l'une des revendications précédentes, caractérisé en ce que la traverse (24) présente une rigidité élevée à la torsion et en ce que l'oscillation de ladite poutre (24) sur un axe vertical par rapport au châssis est amortie au moyen d'amortisseurs hydrauliques (51) qui ont une valeur d'amortissement (F) élevée à faible vitesse et qui sont fixés aux extrémités de ladite traverse (24) un niveau différent de celui des bras oscillants (27).

5. Bogie (3) destiné à un véhicule ferroviaire (1) suivant l'une des revendications précédentes.

**Patentansprüche**

1. Schienenfahrzeug (1) mit mindestens einem Wagenkasten (2) der auf mindestens Zwei Drehgestellen (3) aufliegt, wobei jedes Drehgestell (3) einen Rahmen (4) mit mindestens zwei Längsträgern (6) und mindestens zwei Querträgern (5) umfaßt, wobei ein quer zur Fahrtrichtung (25) des Fahrgestells (3) verlaufender Wiegenbalken (24) mit dem Wagenkasten (2) über Lenkerarme (27) verbunden ist, die im wesentlichen in Fahrtrichtung (25) angeordnet sind und um liegende Wellen (26) schwingen, und wobei der Wagenkasten (2) auf dem Wiegenbalken (24) über Federn (28) aufliegt, wobei der Wiegenbalken (24) in Fahrtrichtung (25) des Drehgestells (3) relativ zum Rahmen (4) durch zwei Federanordnungen (36) aus elastischen Platten (37), z.B. Gummi abgefedert ist, die eine hohe Steifigkeit in Fahrtrichtung (25) aber eine kleine Steifigkeit in Querrichtung aufweisen, dadurch gekennzeichnet, daß der Wiegenbalken (24) auf dem Rahmen (4) über Federanordnungen (33) aus liegenden, elastischen Platten, z.B. Gummi, aufliegt, die eine hohe Steifigkeit in ihrer schräg nach oben und innen geneigten Stapelrichtung (35), aber eine geringe Steifigkeit in Querrichtung dazu aufweisen.

2. Schienenfahrzeug (1) mit mindestens einem Warenkasten (2) der auf mindestens zwei Drehgestellen (3) aufliegt, wobei jedes Drehgestell (3) einen Rahmen (4) mit mindestens zwei Längsträgern (6) und mindestens zwei Querträgern (5) umfaßt, wobei ein quer zur Fahrtrichtung (25) des Fahrgestells (3) verlaufender Wiegenbalken (24) mit dem Wagenkasten (2) über Lenkerarme (27) verbunden ist, die im wesentlichen in Fahrtrichtung (25) angeordnet sind und um liegende Wellen (26) schwingen, und wobei der Wagenkasten (2) auf dem Wiegenbalken (24) über Federn (28) aufliegt, dadurch gekennzeichnet, daß der Wiegenbalken (24) in Fahrtrichtung (25) des Drehgestells (3) relativ zum Rahmen (4) durch zwei Federanordnungen (36) aus elastischen Platten (37), z.B. Gummi abgefedert ist, die eine hohe Steifigkeit in Fahrtrichtung (25) aber eine kleine Steifigkeit in Querrichtung aufweisen, und daß mindestens ein quer zur Fahrtrichtung (25) verlaufendes Torsionsglied (42) mit dem Wagenkasten (2) auf beiden Seiten über zwei nach oben konvergierende Lenkerarme (46) verbunden ist, wobei der Wagenkasten (2) auf dem Fahrgestell (3) über mindestens zwei Federn von geringer Steifigkeit, z.B. pneumatische Federn, abgestützt ist, von denen eine auf einer Seite des Schienenfahrzeugs (1) und die andere auf der anderen Seite angeordnet ist, und wobei das Torsionsglied (42) mit den beiden nach oben konvergierenden Lenkerarmen (46) eine kinematische Umgehung der beiden Federn (28) mit niedriger Steifigkeit darstellt.

3. Schienenfahrzeug (1) nach Anspruch 1 oder 2, dadurch gekennzeichnet, daS die Querverschiebung des Wagenkastens (2) relativ zum Wiegenbalken (24) durch elastische Anschlagsglieder (39) begrenzt ist.

4. Schienenfahrzeug (1) nach einem der vorhergehenden Ansprüche, dadurch gekennzeichnet, daß der Wiegenbalken (24) eine hohe Torsionssteifigkeit hat und daß die Schwingung des Wiegenbalkens (24) auf einer vertikalen Achse relativ zum Rahmen durch hydraulische Dämpfer (51) gedämpft ist, die einen hohen Dämpfungswert (F) bei niedriger Geschwindigkeit haben und die an den Enden des Wiegenbalkens (24) in verschiedener Höhe von den Lenkerarmen (27) angreifen.

5. Drehgestell (3) zur Verwendung für ein Schienenfahrzeug (1) nach einem der vorhergehenden Ansprüche.

FIG.1

FIG.2

FIG.8

FIG.3

FIG.4

FIG.5

EP 0 287 161 B1

FIG.6

FIG.7